# EUROPÄISCHE PATENTANMELDUNG

(11) **EP 4 464 170 A1**
(43) Veröffentlichungstag der Anmeldung: **20.11.2024**
(21) Anmeldenummer: 24155682.8
(22) Anmeldetag: 05.02.2024
(51) Int. Cl.: A23L 3/04, B65G 43/08, B67C 3/22

(54) **TUNNELPASTEUR UND VERFAHREN ZUR ÜBERWACHUNG UND STEUERUNG EINES TUNNELPASTEURS**

(30) Priorität: 19.05.2023 DE 102023113161
(71) Anmelder: Krones AG, 93073 Neutraubling (DE)
(72) Erfinder: MEYER, Andreas, 93073 Neutraubling (DE); STUBENHOFER, Markus, 93073 Neutraubling (DE)
(74) Vertreter: Grünecker Patent- und Rechtsanwälte PartG mbB

(57) **Zusammenfassung**

Beschrieben wird ein Tunnelpasteur zur Pasteurisierung von Abfüllprodukten und ein Verfahren zu dessen Überwachung und Steuerung. Der Tunnelpasteur umfasst Sensoren zur lokalen Überwachung wenigstens eines Verbrauchsmittelparameters und wenigstens eines Maschinenparameters betreffend den Transport und/oder die Temperierung der Abfüllprodukte, einen Datenausgang zum Versenden mittels derartiger sensorischer Überwachung gewonnener Messdaten aus dem Tunnelpasteur und wenigstens einen Dateneingang zum Empfang externer Steuerdaten zur Steuerung des Tunnelpasteurs. Mittels der Messdaten und der empfangenen Steuerdaten lässt sich der Tunnelpasteur programmiert steuern und ermöglicht eine ferngesteuerte Optimierung von Pasteurisierungs- und Instandhaltungsprozessen.

## Beschreibung

Die Erfindung betrifft einen Tunnelpasteur zum Pasteurisierung abgefüllter Produkte und ein Verfahren zur Überwachung und Steuerung eines solchen Tunnelpasteurs.

Tunnelpasteure sind geläufige Bestandteile von Anlagen zur Abfüllung flüssiger Produkte, wie beispielsweise Getränke, in Behälter, wie beispielsweise Flaschen. Es ist prinzipiell bekannt, Maschinenparameter, die beispielsweise den Transport oder die Temperierung der Behälter im Tunnelpasteur betreffen, laufend messtechnisch zu überwachen. Ähnliches gilt für Parameter von Verbrauchsmitteln für Tunnelpasteure, wie beispielsweise Biozide, Reinigungsmittel, Schmierstoffe oder dergleichen, deren Füllstände, Verbräuche und/oder Eigenschaften, wie beispielsweise pH-Werte oder Konzentrationen, laufend überwacht werden können. Messungen solcher Maschinenparameter und Verbrauchsmittelparameter liefern dann in der Regel Istwerte, die beispielsweise durch Vergleich mit Sollwerten zur Steuerung bzw. Regelung des Tunnelpasteurs verwendet werden können.

Nachteilig ist jedoch, dass die zugehörige Betriebsoptimierung und -planung vergleichsweise viel Erfahrung mit der jeweiligen Anlage und Personal mit entsprechender Qualifikation erfordert.

Es besteht daher demgegenüber Verbesserungsbedarf, beispielsweise um Tunnelpasteure nach Installation, Instandhaltung oder Produktionsumstellung schneller zu optimieren und/oder zur effizienteren Bereitstellung von Verbrauchsmitteln.

Die gestellte Aufgabe wird mit einem Tunnelpasteur und mit einem Verfahren zur Überwachung und Steuerung eines Tunnelpasteurs gemäß den unabhängigen Ansprüchen sowie mit einer Abfüllanlage umfassend den Tunnelpasteur gelöst. Bevorzugte Ausführungsformen sind Gegenstand der Unteransprüche.

Der Tunnelpasteur dient demnach der Pasteurisierung von Abfüllprodukten. Bei diesen handelt es sich um mit fließfähigen Produkten, wie beispielsweise Getränken, maschinell gefüllte Behälter, insbesondere Flaschen oder Dosen.

Der Tunnelpasteur umfasst hierzu: Sensoren zur Überwachung wenigstens eines Verbrauchsmittelparameters, bei dem es sich beispielsweise um einen lokalen Zustrom, Verbrauch oder Vorrat oder um eine Eigenschaft eines Verbrauchsmittels des Tunnelpasteuers handelt, und zur Überwachung wenigstens eines Maschinenparameters, der wenigstens den Transport und/oder die Temperierung der Abfüllprodukte betrifft; einen Datenausgang zum Export mittels derartiger sensorischer Überwachung gewonnener Messdaten aus dem Tunnelpasteur; wenigstens einen Dateneingang zum Import extern bereitgestellter Steuerdaten zur Steuerung des Tunnelpasteurs; und eine speicherprogrammierbare Steuereinrichtung zur Steuerung des Tunnelpasteurs basierend auf den empfangenen Steuerdaten und Messdaten, die mittels der sensorischen Überwachung gewonnen werden.

Die gewonnenen Messdaten können somit außerhalb des Tunnelpasteurs gesammelt und verarbeitet werden, beispielsweise in einem maschinenübergreifenden Überwachungssystem. Auch kann man dort die externen Steuerdaten erzeugen und an den Tunnelpasteur übermitteln.

Somit ist eine zentrale Verarbeitung der Messdaten und Erzeugung der Steuerdaten extern möglich, beispielsweise um die mit den Sensoren gewonnenen Messdaten miteinander und/oder mit historischen Messdaten zu verrechnen. Dadurch lässt sich beispielsweise prognostizieren, wie sich bestimmte Konstellationen von Maschinen- und Verbrauchsmittelparametern auf zukünftige Produktionsprozesse auswirken können. Auch lassen sich historische Messdaten oder anderweitige Erfahrungswerte von Tunnelpasteuren vergleichbarer Bauart in die zentrale / externe Datenverarbeitung einbeziehen.

Auf dieser Grundlage können die Steuerdaten automatisch erzeugt und an den Tunnelpasteur gesandt werden, um beispielsweise einen bestimmten Maschinenzustand und/oder einen Betriebsmodus des Tunnelpasteurs auf geeignete Weise anzupassen. Beispielsweise kann ein Aktor des Tunnelpasteurs dadurch direkt angesteuert oder ein zugehöriger Sollwert angepasst werden. Dies kann den überwachten Verbrauchsmittel- und/oder Maschinenparameter betreffen.

Unter einer Überwachung ist hier definitionsgemäß eine kontinuierliche oder in ausreichend kurzen zeitlichen Abständen wiederholte Messung zu verstehen, sodass sich daraus ein zeitlicher Verlauf des überwachten Parameters innerhalb eines laufenden Produktions- oder Instandhaltungsprozesses bestimmen oder zur Planung eines solchen Prozesses prognostizieren lässt.

Verbrauchsmittel im Sinne der vorliegenden Erfindung sind insbesondere solche, für die ein chargenweiser Nachschub aus Transportbehältern oder dergleichen erforderlich ist, beispielsweise Biozide (Desinfektionsmittel), Reinigungsmittel, Säuren und Laugen zur pH-Regulierung, technische Additiven wie beispielsweise Korrosionsschutzmittel, und Schmierstoffe für Antriebe. Im Gegensatz dazu können Verbräuche aus (öffentlichen) Versorgungsnetzen gesehen werden. Strom, Gas- und Frischwasserverbräuche können im Sinne der vorliegenden Erfindung daher als Maschinenparameter des Tunnelpasteurs angesehen und entsprechend überwacht werden.

Die derart zentrale Auswertung der erhobenen Messdaten und Erzeugung der Steuerdaten erfolgt vorzugsweise in einem maschinenübergreifenden Überwachungssystem zur digitalen ortsunabhängigen Überwachung von Maschinenzuständen (Condition-Monitoring-Tool, auch Watchdog genannt), das beispielsweise in einer Daten-Cloud bzw. auf zugehörigen Servern in prinzipiell bekannter Weise ortsunabhängig bereitgestellt werden kann. Unter "maschinenübergreifend" kann hier insbesondere auch "anlagenübergreifend" verstanden werden, also beispielsweise wenigstens zwei Produktionsstandorte umfassend.

Mit einem derart maschinenübergreifenden Überwachungssystem ist zudem eine Anzeige von Messdaten, Maschinenzuständen und/oder Handlungsempfehlungen auf mobilen Endgeräten möglich, beispielsweise auf einem Smartphone oder einer Smartwatch. Auch können auf diese Weise Prognosedaten ermittelt und ausgegeben werden, beispielsweise eine mit Vorräten von Verbrauchsmitteln mögliche Restlaufzeit des Tunnelpasteurs. Auch können Anweisungen für den Nachschub bestimmter Verbrauchsmittel mobil ausgegeben werden. Solche Angaben können beispielsweise in Ergänzung zu den Steuerdaten auch direkt an den Tunnelpasteur gesandt und dort angezeigt werden.

In einer den Tunnelpasteur umfassenden Abfüllanlage können zudem weitere Messdaten und/oder Maschinenzustandsdaten ermittelt und an das maschinenübergreifende Überwachungssystem übermittelt werden, beispielsweise von wenigstens einer Messvorrichtung zum Erfassen einer Umweltbedingung im Bereich des Tunnelpasteurs, von einer dem Tunnelpasteur vor- oder nachgeschalteten Inspektionsvorrichtung zur Inspektion der zu pasteurisierenden bzw. pasteurisierten Abfüllprodukte, und/oder von wenigstens einer mit dem Tunnelpasteur verbundenen Versorgungs- oder Entsorgungsvorrichtung zur Bereitstellung bzw. Entsorgung eines Verbrauchsmittels des Tunnelpasteurs.

Somit kann zum einen der Betrieb des Tunnelpasteurs zeitnah an die auf diese Weise festgestellten Messdaten und/oder Maschinenzustandsdaten angepasst werden. Zum anderen können derartige Messdaten und/oder Maschinenzustandsdaten vom maschinenübergreifenden Überwachungssystem auch für spätere Datenauswertungen gespeichert und beispielsweise für statistische Auswertungen oder dergleichen verwendet werden. Der Produktionsbetrieb des Tunnelpasteurs lässt sich somit sowohl im Hinblick auf den aktuellen Produktionsbetrieb in der Abfüllanlage als auch hinsichtlich unterschiedlicher Erfahrungswerte mit dem Tunnelpasteur oder bauartgleichen Tunnelpasteuren schnell und präzise optimieren.

Bei dem Verfahren zur Überwachung und Steuerung eines Tunnelpasteurs überwacht man sensorisch Istwerte wenigstens eines Verbrauchsmittelparameters, der einen lokalen Zustrom, Verbrauch oder Vorrat und/oder eine Eigenschaft eines Verbrauchsmittels des Tunnelpasteurs betrifft, und Istwerte wenigstens eines Maschinenparameters, der den Transport und/oder die Temperierung der Abfüllprodukte betrifft, insbesondere jeweils im Bereich des Tunnelpasteurs. Ferner versendet man auf dieser Grundlage gewonnene Messdaten in einen Bereich außerhalb des Tunnelpasteurs und insbesondere außerhalb der Abfüllanlage und empfängt im Gegenzug entsprechend außerhalb bereitgestellte Steuerdaten zur Steuerung des Tunnelpasteurs. Schließlich wird der Tunnelpasteur auf der Grundlage der empfangenen Steuerdaten und mittels der sensorischen Überwachung gewonnener Messdaten auf elektronisch programmierte Weise gesteuert.

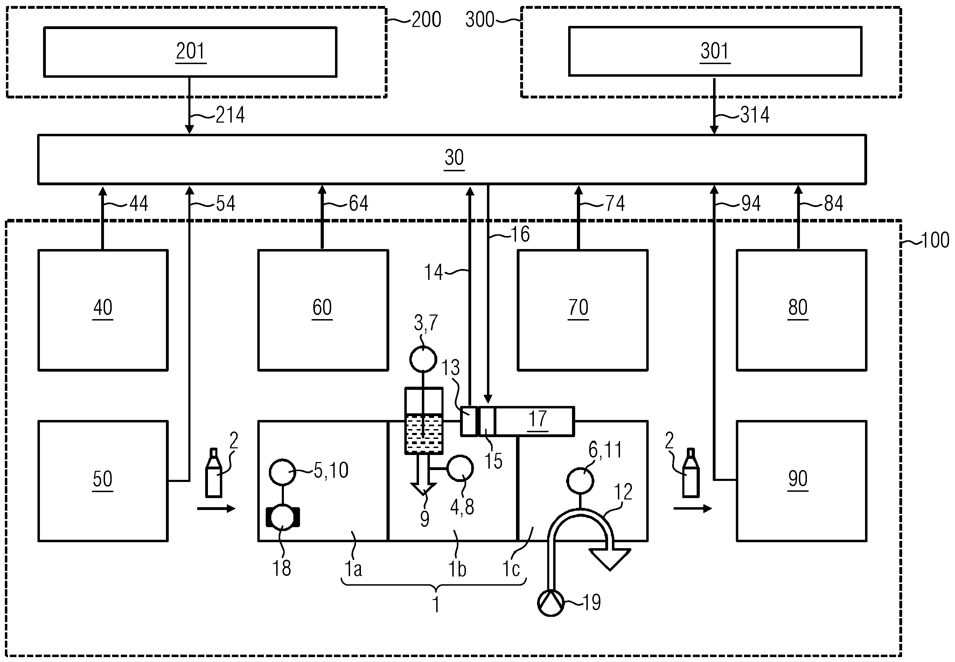

Eine bevorzugte Ausführungsform der Erfindung ist zeichnerisch dargestellt. Die einzige Figur zeigt schematisch einen Tunnelpasteur als Bestandteil einer Abfüllanlage und mit einem maschinenübergreifenden Überwachungssystem.

Wie die Figur erkennen lässt, gehört der Tunnelpasteur 1 zu einer Abfüllanlage 100 und kann auf prinzipiell bekannte Weise mehrere Temperierungszonen 1a, 1b, 1c umfassen, die von Abfüllprodukten 2, also beispielsweise von mit Getränk gefüllten Flaschen oder Dosen, zu deren Pasteurisierung beispielsweise auf Transportbändern (nicht dargestellt) stehend durchlaufen werden.

Der Tunnelpasteur 1 umfasst Sensoren 3, 4, 5, 6 zur laufenden Überwachung wenigstens eines Verbrauchsmittelparameters 7, 8 wenigstens eines Verbrauchsmittels 9 des Tunnelpasteurs 1 und zur Überwachung wenigstens eines Maschinenparameters 10, 11 des Tunnelpasteurs 1 betreffend den Transport und/oder die Temperierung der Abfüllprodukte 2.

Im gezeigten Beispiel misst ein erster Sensor 3 einen ersten Verbrauchsmittelparameter 7, bei dem es sich hier um einen Füllstand eines Verbrauchsmittels 9 handelt, beispielsweise eines Biozids zur Desinfektion des Tunnelpasteurs 1, dessen Zufuhr hier lediglich symbolisiert dargestellt ist. Ferner misst ein zweiter Sensor 4 einen zweiten Verbrauchsmittelparameter 8, der hier beispielhaft eine Eigenschaft des Verbrauchsmittels 9 betrifft, beispielsweise dessen Konzentration, Temperatur oder pH-Wert.

Vorzugsweise wird (unabhängig von der dargestellten Ausführungsform) eine Vielzahl von Verbrauchsmittelparametern 7, 8 des Tunnelpasteurs 1 überwacht, beispielsweise ein Zustrom, Verbrauch, Vorrat und/oder eine Eigenschaft des jeweiligen Verbrauchsmittels 9.

Überwachte Verbrauchsmittel 9 sind (unabhängig von der dargestellten Ausführungsform) insbesondere solche, die für den Produktionsbetrieb und die regelmäßige Instandhaltung des Tunnelpasteurs 1 eingesetzt werden und bedarfsabhängig nachzufüllen sind, beispielsweise für eine hygienische und zuverlässige Pasteurisierung der Abfüllprodukte 2, zur Reinigung und/oder separaten Desinfektion des Tunnelpasteurs 1 und/oder als Hilfsstoffe für dessen Aggregate bzw. Aktoren, beispielsweise zur Bandschmierung oder dergleichen.

Als Beispiele für Maschinenparameter im Sinne der vorliegenden Erfindung wird hier ein erster Maschinenparameter 10 in Form einer Transportgeschwindigkeit der Abfüllprodukte 2 im Tunnelpasteur 1 mit einem dritten Sensor 5 und ein zweiter Maschinenparameter 11 in Form einer Temperatur von Temperierungswasser 12 zur Temperierung der Abfüllprodukte 2 im Tunnelpasteur 1 mit einem vierten Sensor 6 gemessen. Andere denkbare Maschinenparameter 11 wären beispielsweise der Leitwert, der pH-Wert oder eine mikrobiologische Kenngröße für das Temperierungswasser 12 oder dergleichen Prozessmedien.

Wenigstens ein Verbrauchsmittel 9, beispielsweise ein Biozid und/oder ein anderes technisches Additiv, kann dem im Produktionsbetrieb des Tunnelpasteurs 1 in diesem zirkulierenden Temperierungswasser 12 beispielsweise mittels prinzipiell bekannter Dosiereinrichtungen (nicht dargestellt) automatisch zudosiert werden. Ebenso ist zur Instandhaltung eine entsprechende Zudosierung zu einer Reinigungsflüssigkeit und/oder zu Spülwasser (nicht dargestellt) möglich.

Der Tunnelpasteur 1 umfasst wenigstens einen Datenausgang 13 zum Versenden von Messdaten 14, die mit wenigstens einem der Sensoren 3 bis 6 gewonnen werden. Bei den Messdaten 14 kann es sich sowohl um Rohdaten als auch um auf geeignete Weise im Bereich des Tunnelpasteurs 1 verarbeitete Messdaten handeln.

Unter dem Versenden der Messdaten 14 ist deren Export in einen Bereich außerhalb des Tunnelpasteurs 1 und insbesondere in einen Bereich außerhalb der den Tunnelpasteur 1 umfassenden Abfüllanlage 100 zu verstehen.

Der Tunnelpasteur 1 umfasst wenigstens einen Dateneingang 15 zum Empfang externer Steuerdaten 16, also solcher, die außerhalb des Tunnelpasteurs 1 und insbesondere außerhalb der diesen umfassenden Abfüllanlage 100 zur Steuerung des Tunnelpasteurs 1 erzeugt und von dort importiert werden.

Während des Produktionsbetriebs werden die Messdaten 14 vorzugsweise laufend exportiert, ebenso ist dann vorzugsweise laufend der Empfang der externen Steuerdaten 16 möglich.

Der Tunnelpasteur 1 umfasst wenigstens eine speicherprogrammierbare Steuereinrichtung 17 zur Steuerung des Tunnelpasteurs 1 mittels der über den wenigstens einen Dateneingang 15 empfangenen Steuerdaten 16 und mittels zumindest eines Anteils der Messdaten 14, die mittels der Sensoren 3 bis 6 gewonnen werden. Diese Messdaten 14 können von der Steuereinrichtung 17 intern verarbeitet und/oder bereits geeignet aufbereitet an diese übergeben werden.

Die Steuerdaten 16 können beispielsweise Sollwerte einzelner Verbrauchsmittelparameter 7, 8 und/oder einzelner Maschinenparameter 10, 11 sein, die zur Steuerung des Tunnelpasteurs 1 auf prinzipiell bekannte Weise mit von den Sensoren 3 bis 6 ermittelten Istwerten verglichen werden können. Die Steuerdaten 16 können aber auch Steuersignale zur direkten Ansteuerung von Aktoren des Tunnelpasteurs 1 sein. Beispielsweise können die Steuerdaten 16 verwendet werden, einen Bandantrieb 18 für den Transport der Abfüllprodukte 2 durch den Tunnelpasteur 1 und/oder wenigstens eine Pumpe 19 zum Fördern des Temperierungswassers 12 zu steuern.

Die beschriebenen Steuerungsfunktionen (bzw. Regelungsfunktionen) sind als Beispiele der genannten Steuerung des Tunnelpasteurs 1 zu verstehen und basieren auf entsprechender Programmierung der Steuereinrichtung 17, die prinzipiell eine bekannte Architektur aufweisen sowie Eingabe- und Ausgabefunktionen für Bediener umfassen kann.

Der Export der Messdaten 14 und der Import der Steuerdaten 16 erfolgt hier zwischen dem Tunnelpasteur 1 und einem maschinenübergreifenden Überwachungssystem 30, das auch als Condition-Monitoring-Tool oder sogenannter Watchdog bezeichnet werden kann.

Das maschinenübergreifende Überwachungssystem 30 arbeitet vorzugsweise auf der Grundlage einer Daten-Cloud und kann somit beispielsweise auf externen Servern bereitgestellt werden.

Der Export und/oder Import der Messdaten 14 bzw. der Steuerdaten 16 ist beispielsweise drahtlos vom/zum Tunnelpasteur 1 möglich. Auch wäre es denkbar, einzelne Temperierungszonen 1a bis 1c im Sinne eines modularen Aufbaus des Tunnelpasteurs 1 mit eigenen Datenausgängen 13 und Dateneingängen 15 der beschriebenen Art auszustatten (nicht dargestellt).

Im maschinenübergreifenden Überwachungssystem 30 können die vom Tunnelpasteur 1 versandten Messdaten 14 gespeichert und ausgewertet werden. Diese können zum einen dem Tunnelpasteur 1 insgesamt und zum anderen aber auch einzelnen Pasteurisierungsprozessen (Produktionschargen) des Tunnelpasteurs 1 zugeordnet werden. Dies ermöglicht statistische Auswertungen der Messdaten 14 auch über mehrere Pasteurisierungsprozesse hinweg im Sinne einer historischen Prozess-/ Anlagenoptimierung.

Das maschinenübergreifende Überwachungssystem 30 kann zudem Messdaten anderer Prozesseinheiten der Abfüllanlage 100 verarbeiten und mit Messdaten 14 des Tunnelpasteurs 1 vergleichen und/oder verrechnen.

Beispielsweise kann die Abfüllanlage 100 umfassen: eine Flaschenwaschmaschine 40 für Leerflaschen; eine Füllmaschine 50 zum Abfüllen der Abfüllprodukte 2; eine Entsorgungseinheit 60 zur Abwasserentsorgung und gegebenenfalls Aufbereitung des Temperierungswassers 12; eine Versorgungseinheit 70 zum Bereitstellen eines Verbrauchsmittels 9 wie beispielsweise Chlordioxid; einen dem Tunnelpasteur 1 zugeordneten Kühlturm 80; und/oder eine Inspektionseinheit 90 für die pasteurisierten Abfüllprodukte 2.

Solche Prozesseinheiten können jeweils optional zugehörige Messdaten 44, 54, 64, 74, 84, 94 durch entsprechenden Datenexport an das maschinenübergreifende Überwachungssystem 30 senden, wobei es sich um Verbrauchsmittel- und/oder Maschinenparameter der jeweiligen Prozesseinheit handeln kann.

Somit ist eine maschinenübergreifende Auswertung von Messdaten 14, 44, 54, 64, 74, 84, 94 im Überwachungssystem 30 möglich und somit eine entsprechend umfassende Erstellung und Übermittlung externer Steuerdaten 16 an den Tunnelpasteur 1.

Das maschinenübergreifende Überwachungssystem 30 kann zudem anlagenübergreifend arbeiten, beispielsweise unter Einbeziehung von Messdaten 214, 314, die von wenigstens einem Tunnelpasteur 201, 301 wenigstens einer weiteren Abfüllanlage 200, 300 übermittelt werden. Ebenso könnten Messdaten anderer Prozesseinheiten (nicht dargestellt) der jeweiligen Abfüllanlage 200, 300 zum maschinenübergreifenden Überwachungssystem 30 übertragen werden.

Durch eine anlagenübergreifende Auswertung von Messdaten 14, 214, 314 von Tunnelpasteuren 1, 201, 301, die beispielsweise hinsichtlich bestimmter Spezifikationen baugleich sein können, lässt sich eine Vielzahl von Messdaten der beschriebenen Art miteinander verrechnen und als Grundlage für die Ausgabe externer Steuerdaten 16 für den Tunnelpasteur 1 verwenden. Somit können zahlreiche Erfahrungswerte sowohl zur maschinenübergreifenden Prozess- und Anlagenoptimierung innerhalb der Abfüllanlage 100 als auch anlagenübergreifend verwendet werden, also unter Berücksichtigung mehrerer Abfüllanlagen 100, 200, 300.

Mit Hilfe des beschriebenen Exports von Messdaten 14 und Imports externer Steuerdaten 16 können Maschinenfunktionen, die Verbrauchsmittelversorgung und/oder die Instandhaltung des Tunnelpasteurs 1 beispielsweise vom maschinenübergreifenden Überwachungssystem 30 automatisch ferngesteuert werden, also auf digitalem Wege bzw. durch ein Online-Management.

Die Sensoren 3 bis 6 können sowohl Verbrauchsmittelparameter 7, 8, wie beispielsweise Konzentrationen und/oder Füllstände von Verbrauchsmitteln 9, wie beispielsweise von Additiven für das Temperierungswasser 12 oder dergleichen, überwachen, ebenso Maschinenparameter 10, 11, bei denen es sich beispielsweise um eine Wassertemperatur, eine Wasserqualität, einen Wasserverbrauch, einen Energieverbrauch, einen Pumpendruck, eine Filterdurchlässigkeit oder dergleichen handeln kann.

Ebenso können Umgebungsbedingungen bzw. Umgebungsparameter, beispielsweise die Au-ßenlufttemperatur und/oder Außenluftfeuchte im Bereich des Tunnelpasteurs 1, und/oder mikrobiologische Parameter beispielsweise des Temperierungswassers 12 gemessen werden und als Messdaten 14 in die externe Datenauswertung und Erzeugung von Steuerdaten 16 einfließen.

Die Erfassung der Messdaten 14 und die Übertragung der Steuerdaten 16 ist samt zugehöriger Steuerung des Tunnelpasteurs 1 daher vollautomatisch möglich. Beispielsweise können Steuersignale für einzelne Aktoren des Tunnelpasteurs 1 direkt an diesen übertragen werden und/oder Betriebsarten bzw. Steuerprogramme des Tunnelpasteurs 1 mittels der Steuerdaten 16 automatisch ausgewählt werden.

In die Verarbeitung der Messdaten 14 und die Erzeugung der Steuerdaten 16 können auch bei der insbesondere ausgangsseitigen Produktkontrolle gewonnene Messdaten 94 einfließen. Zu diesem Zweck können beispielsweise die Qualität der Pasteurisierung und die Unversehrtheit der Abfüllprodukte 2 im Produktionsbetrieb laufend überwacht werden. Infolge unzureichender Kontrollergebnisse kann der Tunnelpasteur 1 mittels der externen Steuerdaten 16 automatisch auf die jeweiligen Qualitätsabweichungen reagieren.

Das maschinenübergreifende Überwachungssystem 30 kann selbstlernende Algorithmen verwenden, um anhand eines zunehmenden Erfahrungsschatzes aus Messdaten 14 sukzessive die Behandlungsqualität und/oder Effizienz der Produktion bzw. Instandhaltung zu optimieren.

Auf der Grundlage der empfangenen Messdaten 14 kann das maschinenübergreifende Überwachungssystem 30 automatisch auf bestimmte Maschinenzustände bzw. Fehlerzustände des Tunnelpasteurs 1 oder auf Auswertungen der Messdaten 14 reagieren und beispielsweise eine Ferndiagnose durchführen und/oder eine Fehlerbehebung ferngesteuert initiieren.

Zudem können Messdaten 14 vom Tunnelpasteur 1 auf prinzipiell bekannte Weise direkt verarbeitet werden, beispielsweise in der Steuereinrichtung 17, um interne Steuerdaten (nicht dargestellt) zu erzeugen.

Mit dem Tunnelpasteur 1 und dem beschriebenen Verfahren zu dessen Überwachung und Steuerung können Prozessbedingungen der Pasteurisierung durch eine zusätzliche Auswertung historischer Messdaten 14 (früherer Pasteurisierungsprozesse / Produktionschargen) sukzessive verbessert werden. Zudem können Verbrauchsmittel 9 effizienter eingesetzt und deren Nachschub zuverlässig und bedarfsgerecht automatisch organisiert werden.

Die erhobenen Messdaten 14 können prinzipiell standortübergreifend für eine umfassende externe Datenanalyse und Optimierung von Pasteurisierungsprozessen eingesetzt werden.

In dem beschriebenen Tunnelpasteur 1 bzw. mit dem beschriebenen Verfahren können Maschinenparameter 10, 11 beispielsweise betreffend die Funktion von Antriebsketten, Transportbändern, die Belagbildung in Verrohrungen / Leitungen, die Funktionstüchtigkeit von Ventilen, die Temperierung einzelner Temperierungszonen 1a, 1b, 1c, die Dosierung von Bioziden zur Desinfektion, die Funktion von Pumpen, die Funktionalität von Dosier- und Messeinrichtungen und dergleichen zentral überwacht und gegebenenfalls automatisch optimiert werden. Dadurch können mögliche Fehlerquellen und Personalbedarf für diese Zwecke erheblich reduziert werden.

Der Einsatz von Verbrauchsmitteln 9 lässt sich entsprechend optimieren, beispielsweise von oxidierenden Bioziden (wie Chlordioxid oder Chlorbleichlauge) oder Organobioziden / nicht oxidierenden Bioziden (wie Isothiazolinone) zur Desinfektion des Tunnelpasteurs 1 bzw. des Temperierungswassers 12, der Einsatz von Reinigungsmitteln, von technischen Additiven wie Glanzmitteln oder Mitteln zum Korrosionsschutz, zur Unterdrückung von Steinbildung oder zur Härtestabilisierung, und/oder von Säuren und Laugen zur pH-Regulierung. Ebenso kann der Verbrauch von Schmierstoffen, beispielsweise zur Transportbandschmierung, innerhalb des Tunnelpasteurs 1 minimiert werden.

Mit den beschriebenen Sensoren 3 bis 6 kann beispielsweise der Füllstand, Verbrauch und/oder eine Eigenschaft wie die Konzentration bestimmter Verbrauchsmittel 9, beispielsweise von Bioziden zur Desinfektion, überwacht werden. Ebenso kann beispielsweise eine Wasserqualität, wie beispielsweise pH-Wert, visuelle Sauberkeit, Trübung, mikrobiologische Belastung oder dergleichen von Prozessmedien wie beispielsweise des eingesetzten Temperierungswassers 12 laufend überwacht werden. Ebenso sind Prüfungen der Materialverträglichkeit möglich, beispielsweise der Korrosivität bestimmter Verbrauchsmittel 9 in Leitungen und an den Innenwänden des Tunnelpasteurs 1.

Auf der Grundlage der Messdaten 14 können Instandhaltungsprozesse automatisch angefordert oder eingeleitet werden, beispielsweise ein Auskochen des Tunnelpasteurs 1, wobei die dafür verwendete Lauge dann als Verbrauchsmittel 9 anzusehen wäre, oder ein Austausch von Temperierungswasser 12.

Art, Anzahl und Anordnung der dargestellten Sensoren 3 bis 6 und der mittels der Steuerdaten 16 gesteuerten Aktoren, wie beispielsweise des Bandantriebs 18 und der Pumpe 19, sind lediglich beispielhaft und stellvertretend für andere prinzipiell bekannte Sensoren, Aktoren und Aggregate von Tunnelpasteuren 1. Dies gilt auch für die genannten Verbrauchsmittelparameter 7, 8 und Maschinenparameter 10, 11.

## Patentansprüche

1. Tunnelpasteur (1) zur Pasteurisierung von Abfüllprodukten (2), umfassend:
- Sensoren (3 - 6) zur Überwachung wenigstens eines Verbrauchsmittelparameters (7, 8) in Form eines lokalen Zustroms, Verbrauchs, Vorrats und/oder einer Eigenschaft eines Verbrauchsmittels (9) des Tunnelpasteurs und zur Überwachung wenigstens eines Maschinenparameters (10, 11) betreffend den Transport und/oder die Temperierung der Abfüllprodukte im Bereich des Tunnelpasteurs;
- einen Datenausgang (13) zum Versenden mittels derartiger sensorischer Überwachung gewonnener Messdaten (14) aus dem Tunnelpasteur;
- wenigstens einen Dateneingang (15) zum Empfang externer Steuerdaten (16) zur Steuerung des Tunnelpasteurs; und
- eine speicherprogrammierbare Steuereinrichtung (17) zur Steuerung des Tunnelpasteurs auf der Grundlage der empfangenen Steuerdaten (16) und mittels der sensorischen Überwachung gewonnener Messdaten (14).

2. Tunnelpasteur nach Anspruch 1, wobei die Sensoren (3 - 6) dazu ausgebildet sind, IstWerte von wenigstens zwei der folgenden Verbrauchsmittelparameter (7, 8) bzw. Maschinenparameter (10, 11) zu messen: Füllstand, Verbrauch oder Konzentration eines Biozids; Füllstand, Verbrauch oder Konzentration eines Mittels zur Steinverhütung und/oder Härtestabilisierung; Füllstand, Verbrauch oder Konzentration eines Glanzmittels; Füllstand, Verbrauch oder Konzentration eines Korrosionsschutzmittels; pH-Wert einer Lauge oder Säure; Füllstand oder Verbrauch eines Schmierstoffs; Leitwert, Trübung oder mikrobielle Belastung von Temperierungswasser (12); Wassertemperatur in Temperierungszonen (1a - 1c) des Tunnelpasteurs (1); Antriebsgeschwindigkeit eines Transportbandantriebs (18); Ventilstellung an einer, Durchfluss durch eine, oder Belagdicke in einer Leitung für das Verbrauchsmittel oder Temperierungswasser; Leistung einer Pumpe (19) für ein Verbrauchsmittel (9) oder Temperierungswasser; Leistung einer Dosiereinrichtung für ein Verbrauchsmittel.

3. Tunnelpasteur nach Anspruch 1 oder 2, wobei die Steuereinrichtung (17) dazu programmiert ist, einen Maschinenzustand und/oder Betriebsmodus des Tunnelpasteurs (1), insbesondere den überwachten Verbrauchsmittelparameter (7, 8) und/oder Maschinenparameter (10, 11), auf der Grundlage der empfangenen Steuerdaten (16) automatisch anzupassen.

4. Tunnelpasteur nach einem der vorigen Ansprüche, wobei der Dateneingang (15) zum insbesondere drahtlosen Empfang der Steuerdaten (16) von einem maschinenübergreifenden Überwachungssystem (30) und der Datenausgang (13) zum insbesondere drahtlosen Versand der Messdaten (14) an dieses ausgebildet sind.

5. Abfüllanlage (100) umfassend den Tunnelpasteur (1) nach Anspruch 4 und wenigstens eine der folgenden und jeweils zum Versand von Messdaten (14) und/oder Maschinenzustandsdaten an das maschinenübergreifende Überwachungssystem (30) eingerichteten Prozesseinheiten: eine Messvorrichtung zum Erfassen einer Umweltbedingung; eine dem Tunnelpasteur vorgeschaltete oder nachgeschaltete Inspektionsvorrichtung (90) zur Inspektion der zu pasteurisierenden bzw. pasteurisierten Abfüllprodukte (2); eine mit dem Tunnelpasteur verbundene Versorgungseinheit (70) zur Bereitstellung eines Verbrauchsmittels (9) des Tunnelpasteurs; und eine mit dem Tunnelpasteur verbundene Entsorgungseinheit (60) zur Entsorgung und insbesondere Aufbereitung von Temperierungswasser (12).

6. Verfahren zur Überwachung und Steuerung eines Tunnelpasteurs (1) für Abfüllprodukte (2), wobei man: Istwerte wenigstens eines Verbrauchsmittelparameters (7, 8) betreffend einen Zustrom, Verbrauch, Vorrat und/oder eine Eigenschaft eines Verbrauchsmittels (9) des Tunnelpasteurs und Istwerte wenigstens eines Maschinenparameters (10, 11) betreffend den dortigen Transport und/oder die Temperierung der Abfüllprodukte sensorisch überwacht; auf dieser Grundlage gewonnene Messdaten (14) in einen Bereich außerhalb des Tunnelpasteurs versendet; außerhalb des Tunnelpasteurs bereitgestellte Steuerdaten (16) zur Steuerung des Tunnelpasteurs empfängt; und den Tunnelpasteur auf der Grundlage der empfangenen Steuerdaten und mittels der sensorischen Überwachung gewonnener Messdaten elektronisch programmiert steuert.

7. Verfahren nach Anspruch 6, wobei die Verbrauchsmittelparameter (7, 8) bzw. Maschinenparameter (10, 11) umfassen: Füllstand, Verbrauch oder Konzentration eines Biozids; Füllstand, Verbrauch oder Konzentration eines Mittels zur Steinverhütung und/oder Härtestabilisierung; Füllstand, Verbrauch oder Konzentration eines Glanzmittels; Füllstand, Verbrauch oder Konzentration eines Korrosionsschutzmittels; pH-Wert einer Lauge oder Säure; Füllstand oder Verbrauch eines Schmierstoffs; Leitwert, Trübung oder mikrobielle Belastung von Temperierungswasser (12); Wassertemperatur in Temperierungszonen (1a - 1c) des Tunnelpasteurs (1); Antriebsgeschwindigkeit eines Transportbandantriebs (18); Ventilstellung an einer, Durchfluss durch eine oder Belagdicke in einer Leitung für ein Verbrauchsmittel oder Temperierungswasser; Leistung einer Pumpe (19) für ein Verbrauchsmittel (9) oder Temperierungswasser; Leistung einer Dosiereinrichtung für ein Verbrauchsmittel.

8. Verfahren nach Anspruch 6 oder 7, wobei man einen Maschinenzustand und/oder Betriebsmodus des Tunnelpasteurs (1), insbesondere den überwachten Verbrauchsmittelparameter (7, 8) und/oder Maschinenparameter (10, 11), mittels der empfangenen Steuerdaten (16) automatisch anpasst.

9. Verfahren nach wenigstens einem der Ansprüche 6 bis 8, wobei die Messdaten (14) an ein cloud-basiertes maschinenübergreifendes Überwachungssystem (30) versandt und die Steuerdaten (16) von diesem empfangen werden.

10. Verfahren nach Anspruch 9, wobei die Steuerdaten (16) vom maschinenübergreifenden Überwachungssystem (30) auf der Grundlage der übermittelten Messdaten (14) eines laufenden Produktionsprozesses im Tunnelpasteur (1) und entsprechender Messdaten wenigstens eines historischen Produktionsprozesses im selben und/oder in einem im Wesentlichen baugleichen Tunnelpasteur berechnet werden.

11. Verfahren nach Anspruch 9 oder 10, wobei die Steuerdaten (16) vom maschinenübergreifenden Überwachungssystem (30) auf der Grundlage der übermittelten Messdaten (14) und wenigstens einer im Bereich des Tunnelpasteurs (1) gemessener Umweltbedingung und/oder wenigstens eines an dem im Tunnelpasteur zu pasteurisierenden oder pasteurisierten Abfüllprodukten (2) gemessenen Inspektionsergebnisses und/oder wenigstens eines Messergebnisses und/oder Maschinenzustands einer mit dem Tunnelpasteur verbundenen Versorgungseinheit (70) zur Bereitstellung eines Verbrauchsmittels (9) und/oder wenigstens eines Messergebnisses und/oder Maschinenzustands einer mit dem Tunnelpasteur verbundenen Entsorgungseinheit (60) zur Entsorgung und insbesondere Aufbereitung von Temperierungswasser (12) berechnet werden.

12. Verfahren nach einem der Ansprüche 9 bis 11, wobei das maschinenübergreifende Überwachungssystem (30) ferner eingerichtet ist, aus den übermittelten Messdaten (14) Anweisungen für den Nachschub wenigstens eines überwachten Verbrauchsmittels (9) auszugeben und insbesondere an den Tunnelpasteur (1) zu senden.

13. Verfahren nach wenigstens einem der Ansprüche 6 bis 12, wobei das Verbrauchsmittel (9) durch den Tunnelpasteur (1) zirkulierendem Temperierungswasser (12) zudosiert wird.
